# EUROPEAN PATENT SPECIFICATION

(11) **EP 2 809 629 B1**
(45) Date of publication and mention of the grant of the patent: **13.11.2019**
(21) Application number: 13701471.8
(22) Date of filing: 29.01.2013
(51) Int. Cl.: C04B 41/62, E04F 13/08, E04F 15/02

(54) **COVERING MATERIAL FOR FLOORING AND WALLS**
ABDECKUNGSMATERIAL FÜR BÖDEN UND WÄNDE
MATÉRIAU DE COUVERTURE POUR PLANCHERS ET MURS

(30) Priority: 01.02.2012 EP 12153427
(43) Date of publication of application: 10.12.2014
(73) Proprietor: Sika Technology AG, 6340 Baar (CH)
(72) Inventor: HILGENBRINK, Bernhard Karl, D-48565 Steinfurt-Borghorst (DE)
(74) Representative: Sika Patent Attorneys
(86) International application number: PCT/EP2013/051610
(87) International publication number: WO 2013/113667

(56) References cited:
- EP-A2- 1 659 106
- DE-A1-102006 026 699
- DE-C- 242 472
- FR-A1- 2 866 375
- JP-A- 9 295 884
- US-A- 4 350 736
- DATABASE WPI Week 197721 Thomson Scientific, London, GB; AN 1977-37282Y & JP S52 47808 A (AOBA KAGAKU KOGYO KK) 16 April 1977 (1977-04-16)

## Description

### BACKGROUND OF THE INVENTION

### 1. Field of the Invention

The present invention relates to flooring or wall covering materials. More particularly, the present invention relates to flooring or wall covering materials, such as ceramic tiles and natural and artificial stones, which can be removed or replaced from the substrate they cover without causing substantial damage to that substrate.

### 2. Description of the Related Art

Building constructions, like walls and floors, can generally be regarded as having a multilayer structure comprising: a) a bottom constructive or static layer; b) an intermediate or functional layer; and, c) an uppermost decorative layer. For example, concrete floors can be manufactured from liquid cement mixtures that are poured into molds or forms that frame floors, wherein they cure and harden (layer a)); to render the concrete floor straight and level, a layer of self-leveling or self-smoothing agent (b)) is then applied over the uneven concrete, typically at an applied thickness to fill any depression in the concrete surface; and, a tile (c)) may then be applied to the leveled floor.

More complex structures can be formed by including further layers, these typically being additional functional layers (b)) which can act as thermal, sound and / or moisture barriers. The uppermost decorative layer - which for floors would typically be classified as the flooring material and which for walls would typically be classified as the wall covering - may be made from materials including wood, laminated wood, ceramic tiles, stone, terrazzo and the like. These decorative layers are conjoined to the underlying intermediate layer using adhesives.

It is often found that such constructs may not be as sturdy and resistant to damage as might be desired. For instance, damage may result from impact, settlement and staining. This may necessitate the renovation and / or enhancement of the construct and, in some circumstances, the removal and replacement of the decorative layer and / or the intermediate layer. These layers are removed by chisels, hammers, hammer-drills and the like but, even where all due care is exercised in the removal, unwanted damage to the constructive or static layer results. Time and energy must then be expended to remedy this damage. Furthermore, the separate removal of the intermediate and decorative layer is often not possible, a problem which diminishes the possibility of recycling those layers, in particular the decorative layer.

EP 43714 (Ball & Co. Ltd.) describes a method of adhering textile floor coverings to floors in which, after applying adhesive to the floor surface, an intermediate layer is pressed into said adhesive. The intermediate layer is a flexible laminate comprising: a flexible continuous surfaced layer to which the floor covering is adhered; and, a flexible reticulate material or mesh emplaced in the flooring adhesive to leave the continuous surfaced layer uppermost. The continuous surfaced layer prevents penetration of the underlying flooring adhesive through the intermediate layer. The mesh provides physical strength and an adhesion to the flooring adhesive. In removing the floor covering, a portion of the mesh and the floor covering may be grasped at its periphery and pulled to peel off the intermediate layer either from the floor surface together with the flooring adhesive to leave the floor surface substantially clean, or from the flooring adhesive to leave the latter substantially unimpaired.

Irrespective of the benefits of this prior art method, it is not applicable to hard, inflexible flooring materials (or decorative layers) such as ceramic tiles, stone and terrazzo, which cannot be peeled off in this way. There thus remains a need in the art to provide a means for the removal and replacement of such generally inflexible materials which minimizes the damage to any underlying areas and which potentially enables the recycling of these materials.

FR 2866375 describes the use of a primer layer on concrete (or the like). The primer is undefined. Further, an adhesive is applied, made from urethane polymers or SBR, with fillers, or based on a mortar. The adhesive is applied on the primer layer.

DE 10 2006 026699 describes the use of a primer layer on tiles. The primer is applied to improve adhesion, and is based on e.g. polyvinylacetate or polyvinylacetate-coplymer with ethane, acrylic acid and the like. The tiles with the primer are applied with a further adhesive on a substrate.

DE 242472 describes adhering glassy tiles to substrates. In order to preclude breaking of the glass tiles a shellac, dissolved in alcohol is applied on the back-side of the tile. DE 242472 describes the improved adhesion because of its use of shellac.

JP 9295884 describes powder coating tiles (or chinaware) with a nylon-12 resin on a primer.

### BRIEF SUMMARY OF THE INVENTION

In accordance with a first aspect of the present invention, there is provided a hard, inflexible flooring material or wall covering material (1) as defined in claim 1 having a top surface (10) and a bottom surface (20), wherein the bottom surface is provided with a solid, primer layer (21).

This primer layer allows the strength of the bonding between the flooring material or covering material and the substrate to conform with the standard requirements like EN 12004, at least for dry and wet loading. If used on a standard concrete type of substrate, the strength will be higher than 0.5 N/mm².

This hard, inflexible flooring material or wall covering material (1) may be formed in a method as defined in claim 7.

In a particular embodiment, this floor or wall covering material is a tile, preferably a ceramic tile, having a top surface (10) and a bottom surface (20), wherein the bottom surface is provided with a solid, primer layer (21) which primer layer comprises 60 wt% to 100 wt% of a hydrophobic material, and is present in a thickness between 0.001 to 0.5 mm.

The primer layer (21) applied to the tiles should typically have a thickness of from 0.001 to 0.5 mm and preferably from 0.005 to 0.05 mm. It is also preferred that primer layer (21) be substantially planer and completely cover said bottom surface (20).

The primer layer (21) of the covering material, tile or ceramic tile comprises 60 wt% to 100 wt% of a hydrophobic material. The hydrophobicity can be defined with a contact angle, or critical surface tension. The contact angle of a drop of water on a flat surface of the hydrophobic material generally will be about 90 degrees or higher. The critical surface tension will be about 30 mJ/m² or lower.

The primer layer is hydrophobic, and comprises a hydrophobic material selected from the group consisting of C₂₀ to C₇₀ linear or cycloalkanes; natural waxes; slack wax; polytetrafluorethylene (PTFE) resins; perfluoroalkoxy (PFA) resins; fluorinated ethylene propylene (FEP) resins; and, mixtures thereof.

The solid primer layer comprises from 60 to 100%, preferably from 60 to 95%, by weight of total solids of the hydrophobic materials such as waxes and / or resinous materials mentioned above. Such primer generally will give the required strength of bonding, in particular if the thickness of the layer is from 0.001 to 0.5 mm and preferably from 0.005 to 0.05 mm.

In case hydrocarbon wax type of material is used, the preferred range of thickness is 0.005 to 0.05 mm.

In accordance with further aspects of the invention, there are provided methods of adhering a flooring or covering material (130, 230) to a substrate as defined in claims 9 and 10. The present invention also relates to a coated substrate as defined in claim 11.

The present invention can provide a coated substrate wherein the adhesive strength of the tile to the substrate meets at least level C1 or D1 or R1 as defined in Standard EN 12004. The or each primer layer in the coated substrate provides a predetermined breaking point, that is a zone of relative weakness in the coated substrate, as compared to the other constituent layers or components thereof, in which a split or fracture occurs upon the application of a removal force.

The primer layer therefore allows the strength of the bonding between the flooring material or covering material and the substrate to be higher than 0.5 N/mm² (both after dry storage or after wet storage; assuming a sufficient strong substrate). On gypsum substrates, or other substrates with e.g. a paper layer, the bonding strength generally will be about 0.1 N/mm² or higher as measured according to EN 12004 sections EN 1348 part 8.2 and 8.3, preferably about 0.2 N/mm² or higher..

A skilled practitioner will be aware that for tiles which are provided with a hard glaze and a softer bulk structure, a split between that glaze and the bulk will generally occur when a significant removal force is applied. Such a split may equally occur for substrates prepared in accordance with the present invention, but the additional split at the adhesive and separation layer (250) level enables that bulk tile structure to be recovered substantially intact.

With all substrates, the tiles can be removed from the substrate with only a minimal amount of adhesive or separation layer (250) material attached thereto. Hence, the primer layer according the invention allows the removal with hammer and chisel to separate the tiles from any of the common substrates, while the tiled substrate can still be in conformity with the bonding strengths requirements.

The primer layer can be applied in the factory producing the substrates in a pre-set manner, taking into account the surface of the substrate (porosity and the like), in order to apply the correct thickness of the primer layer.

### Definitions

The term "comprising" as used herein will be understood to mean that the list following is non-exhaustive and may or may not include any other additional suitable items, for example one or more further feature(s), component(s), ingredient(s) and / or substituent(s) as appropriate.

The definition, classification, characteristics and marking of ceramic tiles is provided in European Standard EN 14411. Analogously, the definitions and requirements for natural stone products and modular tiles are provided in European Standard EN 12057.

As used herein, a solid is a material that does not flow under normal gravitational forces without a secondary force acting on the material.

Measurement of the solids content of adhesive or primer materials pursuant shall be conducted in accordance with EPA Test Method 24 (40 CFR 60, Appendix A).

Any determination of the water absorption and / or porosity of ceramic tiles shall be conducted in accordance with ISO 10545-3:1995.

EN 12004 is the European standard setting out the minimum performance requirements for ceramic tile adhesives. The Standard includes the designation and classification system for the different types of adhesives e.g. cementitious, dispersion, reaction resign, based on performance in the various tests. To claim conformance to the Standard, a product must possess the fundamental characteristics (mandatory) outlined for each type of adhesive. Where a party classifies a product to a category within the Standard, e.g. CIT, this automatically confirms conformance. With a suitable substrate, the primer is able to pass the dry EN 1348 part 8,2 and wet loading EN 1348 part 8,3 with 0,5 N/mm².

A hydrophobic material is generally defined as a material that shows a contact angle of a water drop on a flat surface of about 90 degrees or higher. The contact angle can be measured with commonly known techniques, such as the static (or sessile) drop method using the tangent measurement method of a water drop immediately after drop formation. The critical surface tension is about 30 mJ/m² or lower. The critical surface tension can be measured according to ASTM D-2578. It will be understood by the average skilled person, that some variation in the contact angle or surface tension results is immaterial for the performance of the present invention.

### BRIEF DESCRIPTION OF THE DRAWINGS

The features and advantages of the invention will be appreciated upon reference to the following drawings, in which:
Fig. 1a and 1b are illustrations of a tile prepared in accordance with one embodiment of the present invention.
Fig. 2 is an expanded view of a floor construction prepared in accordance with the prior art; and
Fig. 3 is an expanded view of a floor construction in accordance with an embodiment of the present invention.

### DESCRIPTION OF ILLUSTRATIVE EMBODIMENTS

The following is a description of certain embodiments of the invention, given by way of example only and with reference to the drawings.

The products and methods of the present invention will be described and exemplified herein below with respect to ceramic tiles. However, a skilled practitioner will recognize that the product and methods may readily be adapted for tiles composed of other brittle materials such as marble, slate and glass, which materials are also envisaged as being within the scope of the present invention. Also, a skilled practitioner will recognize that the product and methods may readily be adapted for tiles of natural stone or artificial stone tiles bonded by resin and the like.

The hard, inflexible flooring material or wall covering material preferably are (ceramic) tiles.

There is not intended to be any restriction on the thickness, dimensions or shape of the (ceramic) tiles of the present invention. For instance, square tiles of surface dimension 12 inches (30.5 cm) by 12 inches (30.5 cm) are suitable, as are tile pieces or bits of 6 inches (15.2 cm) by six inches (15.2 cm), 4x8 inch (10.1x20.3 cm); or stripes, like 2x6 inch (5x15.2 cm), or 2x12 inch (5x30.5 cm). Flooring tiles often are up to 50x50 cm and the like. Larger tiles, like 2.5x3.5 m can be used with the present invention, just like very small 1x1 cm mosaic tiles. The tiles most often will be square, but can be octagonal, or another shape.

Ceramic tiles are commonly composed of clays, silica (milled to a desired particle size) and limestone which are mixed together with water to produce a slurry, or slip. Further compositions which may be useful for the production of such slips are described in the literature, such as in US Patent No. 6,127,298. The clay slip is spray dried to produce a homogeneous free flowing granulate which is shaped or formed in a press and then dried and fired in a tunnel kiln.

As is known in the art, variations in the firing and glazing procedures to which the tiles are exposed will provide ceramic tiles of different properties. The present invention has applicability to, for instance, earthenware, stoneware and porcelain ware ceramic tiles or, more technically, to non-vitreous, semi-vitreous, vitreous and impervious ceramic tiles.

Alternatively or additionally, the present invention has particular applicability to (ceramic) tiles of which the bottom surface (20) - that surface to which the primer material is to be applied - is characterized by a water absorption in the absence of the primer layer of from 0.01 to 45%, preferably from 0.1 to 1 to 15%, more preferably from 0.5 to 7.5%, by weight of the tile.

### Tiles

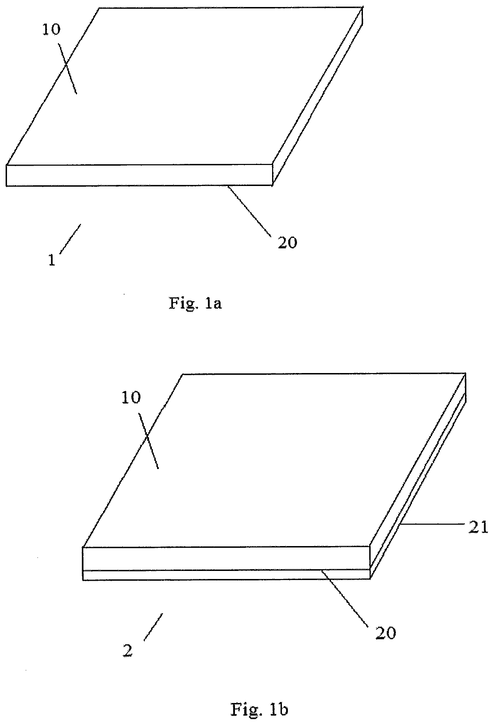

Figure 1a illustrates a tile (1), for use as a decorative layer on a floor or a wall for instance, which comprises a top surface (10) and a bottom surface (20). The top surface (10) is that part of the tile which will be visible in a floor or wall construction and may be provided with glaze or surface structure as is known in the art. The bottom surface (20), is that part of the tile which may be adhered to any underlying substrate. This bottom surface (20) is generally planar but may be provided with some surface structure: for instance, the surface (20) may be divided into panels which are framed by raised perimeters.

As shown in Figure 1b, the bottom surface (20) of the tile (2) is covered in its entirety with a primer layer (21).

The primer layer (21) typically should have a thickness of from 0.001 to 0.5 mm, preferably from 0.005 to 0.05 mm. The optimal thickness may depend on the specific material used for the primer layer. For example, siloxanes require a bit larger thickness than wax to achieve the optimal balance between adhesive strength and possibility to remove the tiles from the substrate

The material or formulation which forms the primer layer (21) is generally provided in the form of an emulsion or dispersion comprising a resin (polymer or pre-polymer) and an appropriate carrier medium. The emulsion or dispersion may be applied - in one or more coats or steps - to the bottom surface (20) of the tile (2) by roller, spraying, brushing or the like. There, the applied primer dries via the evaporation of the carrier medium therefrom, which step may of course be facilitated by heat.

Whilst the viscosity of the applied primer formulation will generally be between 100 to 100,000 mPa·s (100 to 100,000 cps) as measured by a Brookfield viscometer model RVF, with a #6 spindle, at 20 rpm and 20°C, the rheology and shear stability of the primer formulation should be adapted for the application method employed. For primers that are to be suitable for spray application, the viscosity of the formulation may be in the range from 100 to 15000 mPa·s (100 to 15000cps), but is typically from 200 mPa·s to 750 mPa·s (200cps to 750cps) and preferably from 400 to 500 mPa·s (400 to 500 cps). For primers that are to be applied by roller, brush or trowel, the viscosity will typically range from 10,000 to 50,000 mPa·s (10,000 to 50,000 cps) and is preferably from 10,000 to 30,000 mPa·s (10,000 to 30,000cps). The viscosity of the formulation may be adjusted to a desired range by the addition of water, solvents or a thickener. In particular, the primer formulation might be diluted *in situ* with water to a dilution of 1:10, preferably from 1:1 to 1:3.

Moreover, as non-vitreous, semi-vitreous, vitreous and impervious ceramic tiles are distinguished *inter alia* by their porosity and / or liquid absorption, the amount of primer formulation applied to the bottom surface (20) to achieve the desired primer layer (21) thickness must compensate for absorption effects. It has been found that the application of the primer formulation with a spraying can be advantageous in that it ensures the development of a decent film which exhibits no foaming.

In a further advantageous embodiment, the primer formulation may be applied to the bottom surface (20) at a time when said tiles retain some warmth from firing or other heating processes to which they are subjected in their production; the primer, which may be applied to the tiles as they are borne by a conveyor system, will dry more efficiently in such a circumstance.

Suitable materials which may be used either alone or in admixture to form the primer layer (21) - or predetermined fracture zone - of the present invention include C₂₀ to C₇₀ linear and cycloalkanes, such as the solid paraffin waxes icosane (C₂₀H₄₂), triacontane (C₃₀H₆₂), tetracontane (C₄₀H₈₂), pentacontane (C₅₀H₁₀₂) and hexacontane (C₆₀H₁₂₂). Mixtures of such alkanes (paraffins) may be employed and said alkane(s) may be mixed into water and stabilized.

Natural waxes including but not limited to Beeswax, Montan Wax, Carnauba Wax, Microcrystalline Wax, Petroleum Jelly, Ceresine Wax, Ozokerite Wax, Olive Wax, Sunflower Wax, Rice Bran Wax, Avocado Wax, and Jojoba Wax.

Slack wax, that is the oily, soft and crude wax obtained from the pressing of petroleum paraffin distillate.

Water repellant silicones which may be based on: modified or unmodified polysiloxanes such as polydimethylsiloxane; silicone resins; and, mixtures thereof. Preferred in this regard are the Wacker Chemie Silres® BS series resins, based on ethyl silicate.

Polytetrafluoroethylene (PTFE), perfluoroalkoxy (PFA) or fluorinated ethylene propylene (FEP) resins. As suitable commercial products Teflon®, Teflon® PFA, Teflon® FEP (available from DuPont), Neoflon® PFA (available from Daikin), Hyflon® PFA (available from Solvay Solexis) and Dyneon® FEP (available from Dyneon/3M) may be mentioned.

The primer allows the strength of the bonding between the flooring material or covering material and the substrate to be higher than 0.5 N/mm², but the value can be 0.1 N/mm² or more, in case the substrate is not sufficiently strong to achieve higher values, like in many dry boards. The strength generally will be lower than 3 N/mm².

The primer preferably is a non-reactive hydrophobic hydrocarbon, fluorinated hydrocarbon, fluorinated resin or silicone. The bonding strength of the primer layer can be influenced by changing the thickness of the layer. Thicker layers will cause the strength to become lower; if a thinner layer is applied, the bonding strength will be higher.

Preferably, the primer is a non-crosslinking material. Yet, very hydrophobic materials may be used that are crosslinking.

The dried, solid primer layer comprises from 60 to 100%, preferably from 60 to 95%, by weight of total solids of the waxes and / or resinous materials mentioned above, which are hydrocarbons, fluorocarbons, fluoro resins or silicones.

As mentioned above, for their application, these waxes and resinous raw materials (hydrocarbons, fluorocarbons, fluoro resins or silicones) will have been dispersed into an appropriate aqueous or non-aqueous carrier medium. The solids content of that applied primer formulation is selected to ensure sufficient dry add-on levels of the applied materials. The suitability of the selected solids content and of the method of application of the primer layer formulation can be determined by patch tests on the tile surface in order to ensure that the resulting layer is adequate for the purposes of the invention. It may also be desirable to adjust the solids level of the primer formulation to improve the regularity and tightness of the solid layer obtained.

Preferably, the primer layer will be applied in a factory, either on the back side of the tiles, and/or on the front side of substrate boards.

The dispersions or emulsions may further be stabilized, in particular against separation or settlement through the addition of appropriate adjunct ingredients. Said ingredients may also include but are not limited to biocides, defoamers, surfactants, thickeners and plasticizers. Typically, the adjunct ingredients will be included in amounts of from 0.1% to 10% by weight of total resin solids, and preferably less than 5 % by weight.

The description of the primer above, although described with respect to Fig 1, is applicable to the invention as a whole, and therefore also to the description of the following figures, and to the invention as described in the summary of the invention.

### Tiled Substrate

The tile (2) illustrated in Figure 1b may be adhered to a substrate using a suitable adhesive. In a typical adhesion process, the adhesive will be applied to the substrate, using a suitable implement, such a notched trowel, the tile (2) is then emplaced within the applied adhesive and said adhesive is allowed to harden and dry. Such a mode of working - or rather the execution of ceramic linings by thin bed mortar technique(s) - is described in DIN 18157 (Deutsches Institut für Normung e. V.).

Herein "adhesive" is used in a broad sense to include all types of adhesives including neat, water-borne, and solvent-borne adhesives, including pressure sensitive adhesive and non-pressure sensitive adhesives.

Suitable polymeric binders for use in water-borne and solvent-borne adhesives are natural and synthetic polymers, including but not limited to: acrylic and/or methacrylic polymers; structural acrylic polymers; cyanoacrylate polymers; polyvinyl acetate; polyvinyl alcohol; styrene-acrylic copolymers; styrene-butadiene copolymers; acrylonitrile-butadiene-styrene; vinyl acetate-acrylic copolymers; ethylene-vinyl acetate copolymers; vinyl acetate-vinyl versatate copolymers; vinyl acetate-vinyl maleate copolymers; vinyl acetate-vinyl chloride-acrylic terpolymers; ethylene-vinyl acetate-acrylic terpolymers; polyurethane; polyvinyl butyral; polyvinyl chloride; polyvinylidene chloride; polyethylene; ethylene-vinyl acetate copolymers; polypropylene; ethylene/acrylic acid copolymer; ethylene/methyl acrylate copolymers; irradiated polyethylene; polyamide; polyester; epoxy; polyimides; natural rubber; neoprene; nitrile rubber; polybutene; ethylene-propylene-diene rubbers; rubber silicone; animal glue; caseins; starch and wheat flours; dextrins; cellulose; bitumen; rosin; lignin; and, the like. The polymers or prepolymers may optionally contain up to 30% by weight of one or more functional monomers - such as carboxylic acid, phosphate, sulphate, sulphonate, and amide monomers and combinations thereof - non-functional monomer(s), and mixtures thereof.

Cement-based adhesives which may find utility in the present invention are described in EN 12004.

It is preferred that any adhesive used in the present invention be water-borne. General guidelines on how to formulate waterborne binders and adhesives may be found *inter alia* in: R. Jordan, R. Hinterwaldner, "Klebharze - Naturharze - Kohlenwasserstoffharze - Harzdispersionen - Phenolharze", Hinterwaldner Verlag Muenchen, 1994, section 5.8, especially pages 96-102; D.R. Gehman, "Acrylic Adhesives" in "Handbook of Adhesives", 3rd Ed., I. Skeist (Ed.), Van Nostrand Reinhold, New York, 1990, Chapter 25; and, P.A. Lovell, M.S. El-Aasser (Editors), "Emulsion Polymerization and Emulsion Polymers", John Wiley and Sons, Chichester, UK, 1997.

The adhesive formulation is either pre-prepared (one component), or blended *in situ* a short time (dry powders, or two component), typically of the order of 1 to 30 or to 10 minutes, prior to the application step. As is known in the art, the adhesives may be applied to a surface or substrate by a number of methods such as troweling, brushing, dipping, flow coating and spraying. It is also commonplace to employ a notched trowel, for instance a trowel having square notches of a dimension of from 2x2 mm to 15x15m, or from 4x4mm to 10x10mm. Notched trowels having triangular or crescent notches may also be useful herein.

As the skilled applicator would be aware, the optimum performance of an adhesive formulation will be obtained when the application surface(s) is clean and free of dust, dirt, mud, oil, standing water and other foreign materials prior to using adhesive.

The waterborne or solvent-borne adhesive formulations should maintain an appropriate viscosity for application onto a substrate. Broadly, the viscosity, as measured by a Brookfield viscometer model RVF, with a #6 spindle, at 20 rpm and 20°C, can range from 100 to 100,000 mPa·s (100 to 100,000 cps). However, the rheology and shear stability of the adhesive formulation must be adapted to be suitable for the application method employed. For adhesives that are to be suitable for spray application, the viscosity of the formulation may be in the range from 100 to 15000 mPa·s (100 to 15000cps), but is typically from 200 mPa·s to 750 mPa·s (200cps to 750cps) and preferably from 400 to 500 mPa·s (400 to 500 cps). For adhesives that are to be applied by roller, brush or trowel, the viscosity will typically range from 10,000 to 50,000 mPa·s (10,000 to 50,000 cps) and is preferably from 10,000 to 30,000 mPa·s (10,000 to 30,000cps). For floor adhesives, the viscosity is typically in the range from 10,000 to 100,000 mPa·s (10,000 to 100,000cps). The viscosity of the formulation may be adjusted to a desired range by the addition of water, solvents or a thickener, such as an acrylic polymer dispersion.

The adhesive formulation may be applied to the substrate at a consumption of from 0.5 to 10 kg/m², preferably from 2.5 to 5.0 kg/m². In any event, the wet film thickness of the adhesive upon the substrate should be sufficient such that, upon drying, the thickness of the adhesive layer is in the range from 0.1 to 10 mm, preferably from 0.1 to 5 mm. The optimum thickness of the adhesive layer will depend on the type of adhesive, and on the disposition (wall, floor) and composition of the substrate.

One or more tiles (2) are emplaced in the layer of wet adhesive and, where appropriate, pressure applied. The carrier medium is removed from the applied adhesive formulation by natural drying or accelerated drying - through applying heat - to form a coating. Alternatively, cement-based or multicomponent adhesives may be allowed to harden through the reaction of cement with water or the reaction of a resin and a hardener. The degree of adhesion between the ceramic tiles to the substrate may be investigated as the adhesive drying progresses by, for instance, detaching or trying to detach a given tile.

For a ceramic tile as described above, EN 12004 provides a technical standard for the adhesive strength with which the tile must be adhered, specifically that this must meet a minimum of 0,5 N/mm² (level C1), assuming an appropriate background. In order to meet this adhesive standard where both a primer layer (21) and an adhesive are disposed between the substrate and a given ceramic tile, it is preferable to select an adhesive which by itself and when applied at the same coverage and wet film thickness, would an adhesive strength (without the primer) of at least 1 N/mm² (Level C2).

The adhesive is described in relation to Fig 1b, but the description thereof is applicable to the invention as a whole, including the other figures and the invention as described in the summary of the invention.

### Alternative Tiled Substrate

The above described tiled substrate represents a preferred embodiment of the present invention because the tile (2) provided with the primer layer (21) can be easily produced and transported to its point of use, where standard methods of adhering the tiles may be employed.

It is however also envisaged that a tiled substrate may also be formed - and equally provided with a primer layer within which any fracture can be localized when the removal of the tiles is desired - using the tile (1) depicted in Figure 1a). In this embodiment, a layer of primer is first applied to the substrate and allowed to cure or dry thereon; a layer of adhesive is then applied over the dried primer layer, the tile (1) is pressed into the adhesive layer and the adhesive layer is allowed to dry.

Whilst the above described methodology for applying the adhesive and emplacing the tiles applies equally to this embodiment, the properties of the primer may require some adaptation to compensate for the porosity difference between the substrate and the bottom (20) of the tile.

The present invention will now be described with respect to a more complex building constructs.

### Floor Construction

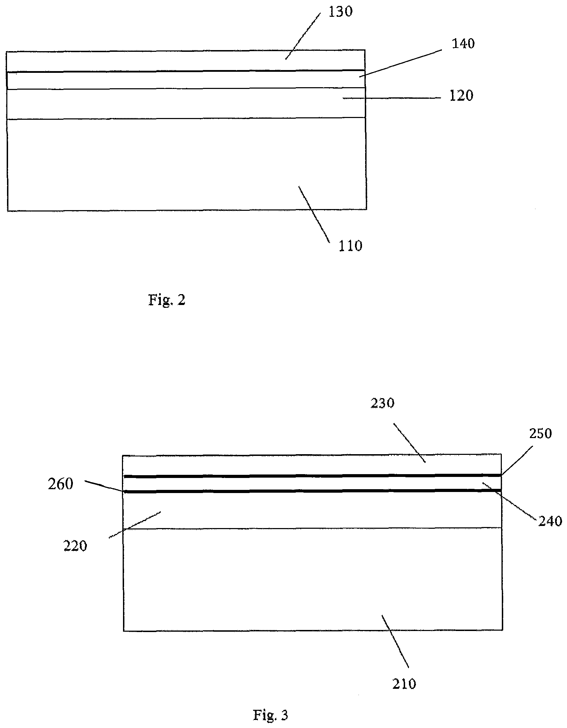

As shown in Figure 2, there is provided an illustrative floor construction (100) according the prior art comprising a constructive or static layer (110), an intermediate layer (120) and a ceramic tile (130). A layer of adhesive may be positioned between the static layer (110) and the intermediate layer (120), depending on the construct of these layers. An adhesive layer (140) is required between the intermediate layer (120) and the ceramic tile (130).

In Figure 3, there is provided a floor construction in accordance with the present invention whereby a separation or primer layer (250), functioning as a pre-determined breaking point, is provided between the adhesive layer (240) the ceramic tile (230).

As described above, the disposition of an alternative or additional separation or primer layer (260) to that primer layer (250) can be achieved by applying a primer onto the top of the intermediate layer (220). Figure 3 illustrates that embodiment where a solid, primer layer (260) is provided in addition to that solid, primer layer (250) provided on the back of ceramic tiles (230). However, one primer layer suffices, and the primer layer (260) may be the sole primer layer.

The identities of the constructive layer (210) and the intermediate layer (220) are not intended to be limited. For instance either may be drywall, plaster, metal, masonry, concrete, brick, screed, leveling compounds or other cementitious substrates. The intermediate layer (220) may of course have a more a complex structure, such as a multi-layer structure, and may equally be or comprise a thermal, water or acoustic barrier, as is known in the art.

In accordance with a preferred embodiment of the invention, the static or constructive layer (210) comprises drywall, concrete, or brick and the intermediate layer (220) comprises a layer of screed and / or leveling compounds.

As used herein, leveling compounds are free-flowing compounds - commercially available in powder form - which are mixed with water to form a slurry that is then poured or pumped onto a floor, where it levels out and hardens to form a smooth, leveled floor surface.

Leveling compounds are generally based on inorganic binders - such as calcium sulfate, aluminous cement or Portland cement - as described in *inter alia* DE 101 59 337 A and EP 0884 291 A1. However, leveling compounds can also comprise polymeric dispersion powder(s), such as spray-dried dispersion powders of homo- or copolymers of vinyl acetate, vinyl versatate and/or vinyl laurate. Commercially available examples of such dispersion powders are: Vinnapas RE523Z and Vinnapas RE5011 L (available from Wacker); FL2201, FL2211, FL3200, LDM2021, and DM 1140P (available from Elotex); and, PAV333 (available from Rhodia).

Leveling compounds may also comprise fibres, for instance multifilic or monofilic fibres, and fillers. Suitable fibres include polyacrylonitrile fibres, polyamide fibres, polyester fibres, polyimide fibres, carbon fibres or glass fibres.

As used herein, a flowing screed is one which can be pumped or poured and comprises a mixture of cement(s), aggregate(s) and water or calcium sulphate, aggregate / sand and water which is applied to a concrete slab, insulation board or over underfloor heating to give a smooth surface finish. Known screeds of this type are Isocrete Gyvlon™ (available from Isocrete), Lafarge Gyvlon™ and Agila™ Screed available from Lafarge, Ready-Screed Supaflo™ available from RMC, and Truflow™ supplied by Tarmac. A screed comprising recycled glass is described in WO2004101464 (Transmix Group Ltd.).

The adhesives employed between the constructive (110, 210) and intermediate layer(s) (120, 220) and between the intermediate layer (120, 220) and the ceramic tile (130, 230) may be the same or different as the adhesive formulation must be selected based on the nature, for instance the porosity, of substrates to be adhered.

In accordance with one embodiment of the invention, an additional primer layer (not shown) is disposed between the constructive (110, 210) and intermediate layer (120, 220). Where the constructive layer (10, 110) is concrete or a cementitious substrate, such an additional primer may be an asphaltic compound of approved quality and capable of adhering firmly to the concrete. Oil-tar pitch is also known for use as a concrete additional primer by virtue of its penetrating power, but oils may similarly be used for this function. These additional primers, when provided on the static layer (110, 210) can penetrate the laitance layer, eliminate the need to etch or scabble the concrete and improve the adhesion of the subsequently applied intermediate layer, particularly leveling compounds. Further, the provision of the additional primer on the static layer can reduce air bubbles from rising through the leveling compounds.

A person of skill in the art will be aware of suitable additional primers which may be applied to non-concrete static layers. For instance, a cold curing epoxy primer may be applied to ferrous metal substrates. Equally, a solvent based, alkyd type, pigmented primer may be suitable for wood, plaster or other porous substrates as additional primer.

This additional primer layer may be waterproof, resistant to cleaning solutions, steam and water, may be nonflammable, and complies with air-quality standards. Specifically, it is preferred if the applied primer has a VOC content of less than 200g/l, preferably less than 50 g/l.

The additional primer can be applied over the static layer to a dry thickness of from 1 to 10 mm using conventional techniques such as brush, roll or spray application. The application method and rate of application can be modified where, for instance, the additional primer has to fill cracks within the upper part of the static layer.

The rate of additional primer application, or the outer limit of its application time, will depend on the curing rate of the additional primer and thereby upon temperature and moisture level. After application of the additional primer coat, curing should typically occur at ambient temperatures in from 2 to 20 hours, preferably from 3 to 15 hours. After this time has elapsed, a cured additional primer coat adhering to the static layer has been formed.

The invention will now be elucidated with the following example, without imparting any limitation to the invention as defined in the claims as interpreted by the description and elucidated by the examples.

### Examples

### Example 1

MOSA Art. No. 76750 1515 earthenware ceramic tiles (Koninklijke Mosa BV, produced according European Standard EN 14411) were selected and the backs thereof were coated with 1 layer of primer (as defined) using a short hair roller.

The applied primer formulation consisted of a mixture of the following ingredients: 70 wt.% of a paraffinic wax dispersion; 27wt.% water; and, 3 wt.% additives (biocides, defoamers, surfactants, thickeners and plasticizers). The total solids content of the liquid primer formulation was 39 wt.% as measured in accordance with EPA Test Method 24 (40 CFR 60, Appendix A).

The tiles were stored under normal laboratory conditions in order to dry the mentioned primer. The dried, solid primer film on the back of the tile consisted of more than 90.5% by weight of the paraffinic wax.

In accordance with EN 12004, a number of test specimens were then prepared. As the background thereof, concrete plates were used (EN 1323). A cement based tile adhesive that fulfills C2 TE S1 (SCHONOX PFK) was applied to the plates with a notched trowel (notches: 8 x 8 x 8 mm). The coated tiles were then installed into the thin bed mortar (DIN 18157).

One of the prepared specimens was stored dry (28 days, 23±2°C and 50±5% relative humidity) for hardening. The remaining specimens were stored first for 7 days dry, then for 21 days under water (in accordance with European Standard EN 1348). After storage, the tensile strengths of the specimens were evaluated.

For both dry and wet storage of the specimens, a tensile strength of above 0.5 N/mm² was achieved. A break was seen between the back of the tiles and the surface of the hardened tile adhesive: the backs of the removed tiles were free of tile adhesive. The applied primer on the back of the tiles had functioned as fractural zone or predetermined breaking point. Still the construction fulfils the needed adhesion strength according EN 12004 sections 8.2 and 8.3 of EN1348.

### Example 2

MOSA Art. No. 74050V055015 Vitrified ceramic tiles (Koninklijke Mosa bv Netherlands, produced according to EN 14411) were selected.

In accordance with EN 12004 test specimens were prepared. As background, concrete plates were used (EN 1323) and the surfaces thereof were coated with 1 layer of primer (as defined in Example 1 above, to function as predetermined breaking point) using a short hair roller. The concrete plates were stored in normal climate conditions (laboratory) for drying the mentioned primer.

A cement based tile adhesive that fulfills C2 TE S1 according to EN 12004 (SCHONOX PFK) was applied with a notched trowel (notches: 8 x 8 x 8 mm). The tiles were installed into the thin bed mortar (as previously described.

One of the prepared specimens was stored dry (28 days, 23±2°C and 50±5% relative humidity) for hardening. Other specimens were stored at first for 7 days dry and then for 21 days under water (according to EN 1348).

After storage the tensile strength was tested. In both cases (dry and wet storage) a tensile strength of above 0.5 N/mm² was achieved. A break was seen between the surface of the concrete plate and the back of the harden tile adhesive. The surface of the concrete plate was free of tile adhesive. The applied primer on the surface of the concrete plate had functioned as the fractural zone (or breaking point) but the construction had still fulfilled the required adhesion strength according to EN 12004, EN1348 section 8.2 and 8.3.

### Example 3

MOSA Art. No. 76750 1515 earthenware ceramic tiles (Koninklijke Mosa bv Netherlands, produced according to EN 14411) were selected and the backs thereof were coated with 1 layer of primer (as defined in Example 1 above, to function as predetermined breaking point) using a short hair roller. The tiles were stored under normal laboratory conditions for drying the mentioned primer.

As background, a multilayer system was built up. A concrete plate was covered / plastered with a 1.5 cm layer of gypsum based plaster (according to EN 998/1). This sample was stored under normal laboratory conditions to allow the plaster to dry. A dispersion based tile adhesive that fulfills D2 TE according to EN 12004 (SCHONOX HTL) was then applied thereto with a notched trowel (notches: 8 x 8 x 8 mm). And the prepared tiles were then installed into the adhesive as described before. The prepared specimens were then stored dry (28 days, 23±2°C and 50±5% relative humidity) for hardening and drying.

The removal of the tiles was done with a hammer and chisel to simulate the renovation of tiled surfaces at a building site. A break was seen between the back of the tiles and the surface of the hardened tile adhesive. The backs of the removed tiles were free of tile adhesive. The applied primer on the back of the tiles had functioned as a fractural zone.

### Example 4

MOSA Art. No. 76750 1515 earthenware ceramic tiles (Koninklijke Mosa bv Netherlands, produced according to EN 14411) were used for the following example

As background, a commercial water tight gypsum panel system was used. The panels were covered with the primer composition of example 1. The panel was stored under normal laboratory conditions to allow the primer to dry. A dispersion based tile adhesive that fulfills D2 TE according to EN 12004 (SCHONOX HTL) was then applied thereto with a notched trowel (notches: 8 x 8 x 8 mm). And the tiles were then installed into the adhesive as described before. The prepared specimens were then stored dry (28 days, 23±2°C and 50±5% relative humidity) for hardening and drying.

The bonding strength was about 0.2 N/mm², and the failure in the bonding strength was observed at the paper layer covering the gypsum panel.

The removal of the tiles was done with a hammer and chisel to simulate the renovation of tiled surfaces at a building site. A break was seen between the back of the tiles with the hardened tile adhesive and the building panel. The backs of the removed tiles contained all of the adhesive. The applied primer on the panel had functioned as a fractural zone, and the building panels still were in full function after removal of the tiles.

### Example 5

MOSA Art. No. 76750 1515 earthenware ceramic tiles (Koninklijke Mosa BV, produced according European Standard EN 14411) were selected and the backs thereof were coated with 1 layer of primer (as defined) using a short hair roller.

The applied primer formulation consisted of a mixture of the following ingredients: 65 wt.% of a silicone dispersion; 32wt.% water; and, 3 wt.% additives (biocides, defoamers, surfactants, thickeners and plasticizers). The total solids content of the liquid primer formulation was 41 wt.% as measured in accordance with EPA Test Method 24 (40 CFR 60).

The tiles were stored under normal laboratory conditions in order to dry the mentioned primer. The dried, solid primer film on the back of the tile consisted of more than 90% by weight of the silicone resin.

In accordance with EN 12004, a number of test specimens were then prepared. As the background thereof, concrete plates were used (EN 1323). A cement based tile adhesive that fulfills C2 TE S1 (SCHONOX PFK) was applied to the plates with a notched trowel (notches: 8 x 8 x 8 mm). The coated tiles were then installed into the thin bed mortar (DIN 18157).

One of the prepared specimens was stored dry (28 days, 23±2°C and 50±5% relative humidity) for hardening. The remaining specimens were stored first for 7 days dry, then for 21 days under water (in accordance with European Standard EN 1348 sections 8.2 and 8.3). After storage, the tensile strengths of the specimens were evaluated.

For both dry and wet storage of the specimens, a tensile strength of above 0.5 N/mm² was achieved. A break was seen between the back of the tiles and the surface of the hardened tile adhesive: the backs of the removed tiles were free of tile adhesive. The applied primer on the back of the tiles had functioned as fractural zone or predetermined breaking point. Still the construction fulfills the needed adhesion strength under dry or wet loading according EN 12004.

### Example 6

A background as descript in ASTM Designation: C 627 - 93 6.1.2 was prepared. On this background prepared tiles (MOSA Art. No. 74050V055015 Vitrified ceramic tiles (Koninklijke Mosa bv Netherlands, produced according to EN 14411 with interfering primer on the back) were fixed with a tile adhesive C2 according EN 12004. The testing procedure was done according ASTM Designation: C 627 - 93 7. The recording of damaged was done according ASTM Designation: C 627 - 93 8.

### TABLE 1 Loading Schedule for Testing

**Table 1**

| Cycle | Type of wheels | Total weight Per wheel (kg) | Duration of test (hr) | Total number of revolutions |
|---|---|---|---|---|
| 1 | Soft rubber | 45 | 1 | 900 |
| 2 | Soft rubber | 91 | 1 | 900 |
| 3 | Soft rubber | 136 | 1 | 900 |
| 4 | Soft rubber | 136 | 1 | 900 |
| 5 | Hard rubber | 45 | 1 | 900 |
| 6 | Hard rubber | 91 | 1 | 900 |
| 7 | Hard rubber | 136 | 1 | 900 |
| 8 | Hard rubber | 136 | 1 | 900 |
| 9 | Steel | 23 | ½ | 450 |
| 10 | Steel | 45 | ½ | 450 |
| 11 | Steel | 68 | ½ | 450 |
| 12 | Steel | 91 | ½ | 450 |
| 13 | Steel | 114 | ½ | 450 |
| 14 | Steel | 136 | ½ | 450 |

| | | | | |
|---|---|---|---|---|
| Passed cycle 1 - 3 is seen as private loaded area Passed cycle 1 - 6 is seen as low loaded commercial area Passed cycle 1 - 10 is seen as medium loaded commercial area Passed cycle 1 - 12 is seen as high loaded commercial area Passed cycle 1 - 14 is seen as heavy duty area. | | | | |

The result of the testing was, that no damage was seen. This shows that a floor that is build up while including the primer as fractural zone / predetermined breaking point can fulfil the highest grade of loading "heavy duty area" according ASTM Designation: C 627 - 93.

After loading it was possible to remove the ceramic tiles with hammer and chisel with minimal amount of adhesive, and no damage of the substrate, nor to the tiles.

Various changes and modifications to the presently preferred embodiments described herein will be apparent to those skilled in the art. Such changes and modifications can be made without departing from the scope of the present invention and without diminishing its attendant advantages. It is therefore intended that such changes and modifications are covered by the appended claims.

## Claims

1. A hard, inflexible flooring material or wall covering material (1) having a top surface (10) and a bottom surface (20), wherein the bottom surface is provided with a solid, hydrophobic primer layer (21) which primer layer comprises 60 wt% to 100 wt% of a hydrophobic material, and wherein
said primer layer (21) comprises a material selected from the group consisting of: C₂₀ to C₇₀ linear or cycloalkanes; natural waxes; slack wax; polytetrafluorethylene (PTFE) resins; perfluoroalkoxy (PFA) resins; fluorinated ethylene propylene (FEP) resins; and, mixtures thereof; and wherein the flooring or covering material is a ceramic tile, a tile composed of marble, slate and glass, a tile of natural stone or artificial stone tiles bonded by resins.

2. A flooring or covering material as defined in claim 1 which is a ceramic tile.

3. A flooring material according to claim 1 or 2, wherein the primer layer is present in thickness between 0.001 to 0.5 mm.

4. A flooring or covering material as defined in any one of the preceding claims, wherein said solid layer
of primer (21) comprises at least one C₂₀ to C₇₀ linear or cycloalkane, preferably wherein said layer of primer (21) comprises at least one alkane selected from the group consisting of icosane (C₂₀H₄₂), triacontane (C₃₀H₆₂), tetracontane (C₄₀H₈₂), pentacontane (C₅₀H₁₀₂), and hexacontane (C₆₀H₁₂₂).

5. A flooring or covering material as defined in any one of claims 1-4, wherein said primer layer (21) has a thickness of from 0.005 to 0.05 mm.

6. A flooring or covering material as defined in any one of claims 1-5, wherein the primer layer (21) is substantially planer and completely covers said bottom surface (20).

7. A method of forming a hard, inflexible flooring material or wall covering material (1) as defined in any one of claims 1 to 6, said method comprising the steps of:
- providing a floor or wall covering material (1) having a top surface (10) and a bottom surface (20);
- coating the bottom surface (20) with an emulsion or dispersion of a primer material in a carrier medium; and,
- drying said applied coating to form a solid primer layer (21).

8. A method as defined in claim 7, wherein:
the emulsion or dispersion of the primer material has a viscosity of from 100 to 100'000 mPa·s (100 to 100,000 cps) as measured by a Brookfield Viscometer model RVF, with a 6# spindle, at 20 rpm and 20°C; and,
at least one layer of said emulsion or dispersion is coated at a coverage which ensures the dried layer (21) completely covers the bottom surface (20).

9. A method of adhering a flooring or covering material (230) to a substrate, said process comprising the steps of:
- applying an adhesive to at least a portion of the substrate;
- impressing the bottom surface of the flooring or covering material into the substrate; wherein the adhesive is on the substrate and,
- allowing said adhesive to dry;
wherein said flooring or covering material is a hard, inflexible flooring material or wall covering material (1) having a top surface (10) and a bottom surface (20), wherein the bottom surface is provided with a solid, hydrophobic primer layer (21) which primer layer comprises 60 wt% to 100 wt% of a hydrophobic material, and wherein said primer layer (21) comprises a material selected from the group consisting of: C₂₀ to C₇₀ linear or cycloalkanes; natural waxes; slack wax; water repellant silicone resins; polytetrafluorethylene (PTFE) resins; perfluoroalkoxy (PFA) resins; fluorinated ethylene propylene (FEP) resins; and, mixtures thereof.

10. A method of adhering a flooring or covering material (230) to a substrate, said process comprising the steps of:
- applying an adhesive to at least a portion of the flooring or covering material;
- impressing the bottom surface of the flooring or covering material into the substrate; wherein the adhesive is on the flooring or covering material and,
- allowing said adhesive to dry;
wherein said flooring or covering material is a hard, inflexible flooring material or wall covering material (1) having a top surface (10) and a bottom surface (20), wherein the bottom surface is provided with a solid, hydrophobic primer layer (21) which primer layer comprises 60 wt% to 100 wt% of a hydrophobic material, and wherein said primer layer (21) comprises a material selected from the group consisting of: C₂₀ to C₇₀ linear or cycloalkanes; natural waxes; slack wax; water repellant silicone resins; polytetrafluorethylene (PTFE) resins; perfluoroalkoxy (PFA) resins; fluorinated ethylene propylene (FEP) resins; and, mixtures thereof.

11. A coated substrate, comprising a hard, inflexible flooring material or wall covering material (230) having a top surface and a bottom surface, and a substrate (210), to which the flooring or covering material is adhered to by an adhesive layer (240), and a solid, hydrophobic primer layer (250 and/or 260) comprising a material selected from the group consisting of C₂₀ to C₇₀ linear or cycloalkanes; natural waxes; slack wax; water repellant silicone resins; polytetrafluorethylene (PTFE) resins; perfluoroalkoxy (PFA) resins; fluorinated ethylene propylene (FEP) resins; and, mixtures thereof.

12. A coated substrate as defined in claim 11, wherein the adhesive strength of the tile to substrate meets at least level C1 or D1 or R1 as defined in Standard EN 12004.

## Patentansprüche

1. Hartes, starres Bodenbelagmaterial oder Wandverkleidungsmaterial (1) mit einer oberen Oberfläche (10) und einer unteren Oberfläche (20), wobei die untere Oberfläche mit einer festen hydrophoben Grundschicht (21) versehen ist, wobei die Grundschicht 60 Gew.-% bis 100 Gew.-% an einem hydrophoben Material umfasst, und wobei
die Grundschicht (21) ein Material ausgewählt aus der Gruppe bestehend aus: linearen oder cyclischen C₂₀- bis C₇₀-Alkanen; natürlichen Wachsen; Rohparaffin; Polytetrafluorethylen(PTFE)-Harzen; Perfluoralkoxy(PFA)-Harzen; fluoriertes-Ethylenpropylen(FEP)-Harzen; und Gemischen davon; und wobei es sich bei dem Bodenbelag- oder Verkleidungsmaterial um eine Keramikfliese, eine aus Marmor, Schiefer und Glas zusammengesetzte Fliese, eine Natursteinfliese oder mit Harzen gebundene Kunststeinfliesen handelt.

2. Bodenbelag- oder Verkleidungsmaterial gemäß Anspruch 1, das eine Keramikfliese ist.

3. Bodenbelagmaterial gemäß Anspruch 1 oder 2, wobei die Grundschicht in einer Dicke von zwischen 0,001 und 0,5 mm vorhanden ist.

4. Bodenbelag- oder Verkleidungsmaterial gemäß einem der vorstehenden Ansprüche, wobei die feste Grundschicht (21) wenigstens ein lineares oder cyclisches C₂₀- bis C₇₀-Alkan umfasst, wobei die Grundschicht (21) vorzugsweise wenigstens ein Alkan ausgewählt aus der Gruppe bestehend aus Icosan (C₂₀H₄₂), Triacontan (C₃₀H₆₂), Tetracontan (C₄₀H₈₂), Pentacontan (C₅₀H₁₀₂) und Hexacontan (C₆₀H₁₂₂) umfasst.

5. Bodenbelag- oder Verkleidungsmaterial gemäß einem der Ansprüche 1-4, wobei die Grundschicht (21) eine Dicke von 0,005 bis 0,05 mm aufweist.

6. Bodenbelag- oder Verkleidungsmaterial gemäß einem der Ansprüche 1-5, wobei die Grundschicht (21) im Wesentlichen planar ist und die untere Oberfläche (20) vollständig bedeckt.

7. Verfahren zur Herstellung eines harten, starren Bodenbelagmaterials oder Wandverkleidungsmaterials (1) gemäß einem der Ansprüche 1 bis 6, wobei das Verfahren die Schritte umfasst:
- Bereitstellen eines Boden- oder Wandverkleidungsmaterials (1) mit einer oberen Oberfläche (10) und einer unteren Oberfläche (20);
- Beschichten der unteren Oberfläche (20) mit einer Emulsion oder Dispersion eines Grundmaterials in einem Trägermedium; und
- Trocknen der aufgebrachten Beschichtung, um eine feste Grundschicht (21) zu bilden.

8. Verfahren gemäß Anspruch 7, wobei:
die Emulsion oder Dispersion des Grundmaterials eine Viskosität von 100 bis 100.000 mPa.s (100 bis 100.000 cps) aufweist, wie gemessen durch ein Brookfield Viskosimeter, Modell RVF, mit einer Spindel Nr. 6 bei 20 U/min und 20 °C; und
wenigstens eine Schicht der Emulsion oder Dispersion mit einer Bedeckung aufgeschichtet wird, die gewährleistet, dass die getrocknete Schicht (21) die untere Oberfläche (20) vollständig bedeckt.

9. Verfahren zum Anhaften eines Bodenbelag- oder Verkleidungsmaterials (230) an ein Substrat, wobei das Verfahren die Schritte umfasst:
- Aufbringen eines Klebstoffs auf wenigstens einen Teil des Substrats;
- Eindrücken der unteren Oberfläche des Bodenbelag- oder Verkleidungsmaterials in das Substrat; wobei sich der Klebstoff auf dem Substrat befindet; und
- Trocknenlassen des Klebstoffs;
wobei das Bodenbelag- oder Verkleidungsmaterial ein hartes, starres Bodenbelagmaterial oder Wandverkleidungsmaterial (1) mit einer oberen Oberfläche (10) und einer unteren Oberfläche (20) ist, wobei die untere Oberfläche mit einer festen hydrophoben Grundschicht (21) versehen ist, wobei die Grundschicht 60 Gew.-% bis 100 Gew.-% an einem hydrophoben Material umfasst und wobei die Grundschicht (21) ein Material ausgewählt aus der Gruppe bestehend aus: linearen oder cyclischen C₂₀-bis C₇₀-Alkanen; natürlichen Wachsen; Rohparaffin;
wasserabstoßenden Siliconharzen; Polytetrafluorethylen(PTFE)-Harzen; Perfluoralkoxy(PFA)-Harzen; fluoriertes-Ethylenpropylen(FEP)-Harzen; und Gemischen davon umfasst.

10. Verfahren zum Anhaften eines Bodenbelag- oder Verkleidungsmaterials (230) an ein Substrat, wobei das Verfahren die Schritte umfasst:
- Aufbringen eines Klebstoffs auf wenigstens einen Teil des Bodenbelag- oder Verkleidungsmaterials;
- Eindrücken der unteren Oberfläche des Bodenbelag- oder Verkleidungsmaterials in das Substrat; wobei sich der Klebstoff auf dem Bodenbelag- oder Verkleidungsmaterial befindet; und
- Trocknenlassen des Klebstoffs;
wobei das Bodenbelag- oder Verkleidungsmaterial ein hartes, starres Bodenbelagmaterial oder Wandverkleidungsmaterial (1) mit einer oberen Oberfläche (10) und einer unteren Oberfläche (20) ist, wobei die untere Oberfläche mit einer festen hydrophoben Grundschicht (21) versehen ist, wobei die Grundschicht 60 Gew.-% bis 100 Gew.-% an einem hydrophoben Material umfasst und wobei die Grundschicht (21) ein Material ausgewählt aus der Gruppe bestehend aus: linearen oder cyclischen C₂₀-bis C₇₀-Alkanen; natürlichen Wachsen; Rohparaffin;
wasserabstoßenden Siliconharzen; Polytetrafluorethylen(PTFE)-Harzen; Perfluoralkoxy(PFA)-Harzen; fluoriertes-Ethylenpropylen(FEP)-Harzen; und Gemischen davon umfasst.

11. Beschichtetes Substrat, umfassend ein hartes, starres Bodenbelagmaterial oder Wandverkleidungsmaterial (230) mit einer oberen Oberfläche und einer unteren Oberfläche und ein Substrat (210), an das das Bodenbelag- oder Verkleidungsmaterial durch eine Klebstoffschicht (240) haftet, und eine feste hydrophobe Grundschicht (250 und/oder 260) umfassend ein Material ausgewählt aus der Gruppe bestehend aus linearen oder cyclischen C₂₀- bis C₇₀-Alkanen; natürlichen Wachsen; Rohparaffin; wasserabstoßenden Siliconharzen; Polytetrafluorethylen(PTFE)-Harzen; Perfluoralkoxy(PFA)-Harzen; fluoriertes-Ethylenpropylen(FEP)-Harzen; und Gemischen davon.

12. Beschichtetes Substrat gemäß Anspruch 11, wobei die Haftstärke der Fliese an Substrat wenigstens dem Grad C1 oder D1 oder R1 gemäß dem Standard EN 12004 entspricht.

## Revendications

1. Matériau de revêtement de sol ou matériau de parement de mur dur et rigide (1) ayant une surface supérieure (10) et une surface inférieure (20), la surface inférieure étant munie d'une couche d'apprêt solide et hydrophobe (21) qui comprend 60 à 100 % en poids d'un matériau hydrophobe, et
ladite couche d'apprêt (21) comprenant un matériau choisi dans le groupe constitué des chaînes en C₂₀ à C₇₀ linéaires ou cycloalcanes ; cires naturelles ; gatch ; résines de polytétrafluoréthylène (PTFE) ; résines perfluoroalcoxy (PFA) ; résines d'éthylène-propylène fluoré (FEP) ; et leurs mélanges ; et le matériau de revêtement de sol ou de parement étant un carreau céramique, un carreau composé de marbre, d'ardoise et de verre, un carreau en pierre naturelle ou en pierre synthétique liée par une résine.

2. Matériau de revêtement de sol ou de parement selon la revendication 1, qui est un carreau céramique.

3. Matériau de revêtement de sol selon la revendication 1 ou 2, la couche d'apprêt étant présente dans une épaisseur comprise entre 0,001 et 0,5 mm.

4. Matériau de revêtement de sol ou de parement selon l'une quelconque des revendications précédentes, ladite couche solide d'apprêt (21) comprenant au moins une chaîne C₂₀ à C₇₀ linéaire ou cycloalcane, de préférence ladite couche d'apprêt (21) comprenant au moins un alcane choisi dans le groupe comprenant l'icosane (C₂₀H₄₂), le triacontane (C₃₀H₆₂), le tétracontane (C₄₀H₈₂), le pentacontane (C₅₀H₁₀₂) et l'hexacontane (C₆₀H₁₂₂).

5. Matériau de revêtement de sol ou de parement selon l'une quelconque des revendications 1 à 4, ladite couche d'apprêt (21) ayant une épaisseur de 0,005 à 0,05 mm.

6. Matériau de revêtement de sol ou de parement selon l'une quelconque des revendications 1 à 5, la couche d'apprêt (21) étant sensiblement plus plane et recouvrant complètement ladite surface inférieure (20).

7. Procédé de formation d'un matériau de revêtement de sol ou d'un matériau de parement de mur dur et rigide (1) selon l'une quelconque des revendications 1 à 6, ledit procédé comprenant les étapes de :
- fourniture d'un matériau de parement de sol ou de mur (1) ayant une surface supérieure (10) et une surface inférieure (20) ;
- revêtement de la surface inférieure (20) avec une émulsion ou une dispersion d'un matériau d'apprêt dans un milieu porteur ; et,
- séchage dudit revêtement appliqué pour former une couche d'apprêt solide (21).

8. Procédé selon la revendication 7,
l'émulsion ou la dispersion du matériau d'apprêt ayant une viscosité de 100 à 100 000 mPa.s (100 à 100 000 cps) telle que mesurée par un viscosimètre Brookfield modèle RVF, équipé d'une broche n° 6, à 20 tr/min et 20 °C ; et,
au moins une couche de ladite émulsion ou dispersion étant revêtue selon un recouvrement qui assure que la couche séchée (21) recouvre complètement la surface inférieure (20).

9. Procédé pour faire adhérer un matériau de revêtement de sol ou de parement (230) à un substrat, ledit procédé comprenant les étapes suivantes :
- l'application d'un adhésif sur au moins une partie du substrat ;
- l'impression de la surface inférieure du matériau de revêtement de sol ou de parement dans le substrat ; l'adhésif étant sur le substrat et,
- le fait de laisser sécher l'adhésif ;
ledit matériau de revêtement de sol ou de parement étant un matériau de revêtement de sol ou un matériau de parement de mur dur et rigide (1) ayant une surface supérieure (10) et une surface inférieure (20), la surface inférieure étant munie d'une couche d'apprêt solide et hydrophobe (21) laquelle couche d'apprêt comprenant 60 à 100 % en poids d'un matériau hydrophobe, et ladite couche d'apprêt (21) comprenant un matériau sélectionné dans le groupe constitué des chaînes en C₂₀ à C₇₀ linéaires ou cycloalcanes ; cires naturelles ; gatch ; résines siliconées hydrofuges ; résines de polytétrafluoréthylène (PTFE) ; résines perfluoroalcoxy (PFA) ; résines d'éthylène-propylène fluoré (FEP) ; et leurs mélanges.

10. Procédé pour faire adhérer un matériau de revêtement de sol ou de parement (230) à un substrat, ledit procédé comprenant les étapes suivantes :
- l'application d'un adhésif sur au moins une partie du revêtement de sol ou de parement ;
- l'impression de la surface inférieure du revêtement de sol ou de parement dans le substrat ; l'adhésif étant sur le matériau de revêtement de sol ou de parement et,
- le fait de laisser sécher l'adhésif ;
ledit matériau de revêtement de sol ou de parement étant un matériau de revêtement de sol ou un matériau de parement de mur dur et rigide (1) ayant une surface supérieure (10) et une surface inférieure (20), la surface inférieure étant munie d'une couche d'apprêt solide et hydrophobe (21), laquelle couche d'apprêt comprenant 60 à 100 % en poids d'un matériau hydrophobe, et ladite couche d'apprêt (21) comprenant un matériau sélectionné dans le groupe constitué des chaînes en C₂₀ à C₇₀ linéaires ou cycloalcanes ; cires naturelles ; gatch ; résines siliconées hydrofuges ; résines de polytétrafluoréthylène (PTFE) ; résines perfluoroalcoxy (PFA) ; résines d'éthylène-propylène fluoré (FEP) ; et leurs mélanges.

11. Substrat revêtu, comprenant un matériau de revêtement de sol dur et inflexible ou un matériau de parement de mur (230) ayant une surface supérieure et une surface inférieure, et un substrat (210), sur lequel le matériau de revêtement de sol ou de parement est collé par une couche adhésive (240), et une couche d'apprêt solide et hydrophobe (250 et/ou 260) comprenant un matériau choisi dans le groupe constitué des chaînes en C₂₀ à C₇₀ linéaires ou cycloalcanes ; cires naturelles ; gatch ; résines siliconées hydrofuges ; résines de polytétrafluoréthylène (PTFE) ; résines perfluoroalcoxy (PFA) ; résines d'éthylène-propylène fluoré (FEP) ; et leurs mélanges.

12. Substrat revêtu selon la revendication 11, la force adhésive du carreau au substrat satisfaisant au moins au niveau C1 ou D1 ou R1 selon la norme EN 12004.
